# EUROPEAN PATENT APPLICATION

(11) **EP 1 900 508 A1**
(43) Date of publication of application: **19.03.2008**
(21) Application number: 06425644.9
(22) Date of filing: 18.09.2006
(51) Int. Cl.: B32B 5/26, B32B 27/04, B32B 27/42, B32B 29/02

(54) **Decorative laminate composite panels and process for its production**

(71) Applicant: Romanore SpA, 46030 Pomponesco MN (IT)
(72) Inventor: Sibilia, Eugenio, Frati Laminati S.r.l., 27025 Belcreda di Gambolo (PV) (IT)
(74) Representative: Trupiano, Federica

(57) **Abstract**

A decorative composite panel and a process for its production, particularly decorative laminated panel of the so-called "honeycomb" type and process for its production and related products such as the decorative trim panels for ships and for vehicles such as aircraft and railway carriages.

## Description

The present invention relates to a decorative composite panel and a process for its production. In particular, the invention relates to a decorated laminate panel of the "honeycomb" type, its production and related products such as furniture panels for ships and for vehicles such as aircraft and railway coaches.

Various types of materials are known that use a honeycomb base or core in aluminum, Nomex® (aramid honeycomb) or other materials to achieve the above mentioned goal. These panels must have a series of technical characteristics conforming to precise norms and must provide a decorative covering for use in a passenger environment.

The technical norms vary according to whether they are used in the naval, railway or aeronautical field, but they have in common that the panel must be light, both fire- and impact-resistant, and that its surface must be scratch-resistant.

There are panels known for such purpose in which an aluminum sheet, generally 1-2 mm, is glued to the honeycomb core. The sheet may be painted only or may be the base to which is glued a decorative layer of Kraft paper impregnated with phenolic resin and decorative paper impregnated with melamine resin. Interposing the aluminum layer guarantees greater strength to the final product, in as much as the decorative layer by itself is relatively fragile and its bonding to the honeycomb doesn't guarantee acceptable characteristics.

Such decorative/aluminum-bonded laminates are decidedly heavy, so much so as to lose some of the advantages that derive from their use. Furthermore, producing the combination is labor and time-consuming, requiring at least one and usually two extra gluing stages. Another disadvantage is that the finished product can undergo delamination and ungluing of the aluminum and decorative sheets.

Furthermore, there are panels known for aircraft with an internal layer in honeycomb and two external layers in glass fiber impregnated with phenolic resin.

For interior panels, the structure described above is provided with a covering that currently consists of plastic film, mainly in Tedlar® (DuPont), a polyvinylflouride-based film.

The principal disadvantages of these embodiments are the extremely high cost (the covering alone costs Euro 50-60/m²), the need for a plurality of production steps and the limited decoration that can be obtained with them.

The purpose of the present invention is to resolve the aforementioned problems and to provide a composite panel which can be used in a passenger environment and is provided with a decorative layer, that is simple and economic to produce, light and strong, that has all the physical and mechanical characteristics required by the final use, and whose decoration can easily be adapted to the applications of the final user.

Such purpose is achieved by the present invention, which relates to a composite panel characterized according to Claim 1.

The invention furthermore relates to a process for the production of the panel discussed above, characterized according to Claim 9.

In a preferred embodiment of the invention, the impregnation resin of the decorative layer is a phenolic resin.

According to a preferential aspect of the invention, the fabric is a layer of fabric of fibers selected from aramid fibers, PE-UHMW fibers, carbon fibers, glass fibers and mixtures of the same.

Preferably the fibers are glass fibers or aramid fibers and they are in the form of a warp and weft fabric, or of a knitted fabric.

The fabric so obtained is impregnated with thermosetting resin, preferably phenolic, in a quantity in the range between 25 and 60% by weight of the total weight of the final product

According to the invention, the decorative layer is preferably a paper layer impregnated with either phenolic or melamine thermosetting resin.

The material according to the invention has numerous advantages over materials according to the known art.

In fact today, without any interposing aluminum sheets, the resulting final product according to the invention has clearly lower weight for equal mechanical strength compared to materials employed by the known art. Furthermore, there are fewer working steps required to prepare the final panel in as much as the step of gluing the aluminum sheets to the basic structure of the panel is no longer necessary.

A further advantage is that panels of such material can easily be worked to give the required products.

The invention will now be described in more detail with reference to the enclosed drawings which are by way of example and not limiting, where:
- Figures 1 and 2 are schematic views, respectively in section (fig.2) and exploded (fig.1), of a layer of composite material according to the invention applied to the basic layer; and
- Figure 3 is an exploded schematic view of a panel according to the invention.

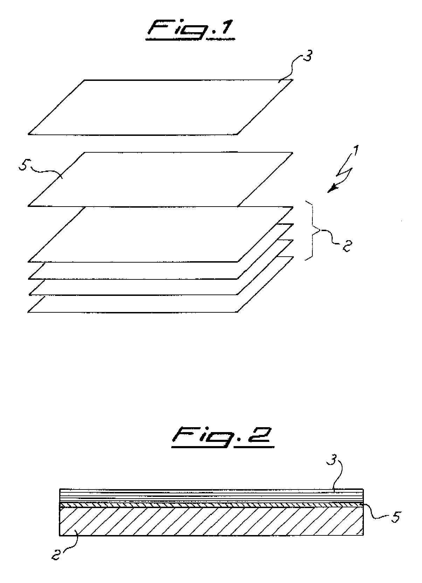

With reference to Figure 1, the material covering the core, or the central layer according to the invention, includes a layer 2 of fabric in glass fiber or analogous reinforcing fibers, impregnated with thermosetting resin. According to a variation of the invention, aramid fibers, polyethylene fibers with ultra-high molecular weight (PE-UHMW = Ultra-High Molecular Weight Polyethylene), carbon fibers and where necessary mixtures of these with glass fibers are used in place of the glass fibers alone.

The fabric is preferably warp and weft fabric or knitted fabric with weight in the range between 20 and 1000 g/m², and preferably between 60 and 450 g/m², and with thickness in the range between 0,05 to 3 mm.

The impregnated fabric is bonded to a decorative layer 3 in decorated paper impregnated with thermosetting resin. The resin used is either melamine or phenolic according to the fire-resistant characteristics required by the final product.

The decorative paper used is preferably paper with weight in the range between 20 and 200 g/m² and impregnated with a quantity of resin between 30 and 80% by weight of the total weight of the product.

For instance, a suitable fabric is that currently used constituted by glass fabric of 200 g/m² with a thickness of 0.18 mm), impregnated with a quantity of phenolic resin in the range between 25% and 60% by weight compared to the total weight of resin + fabric.

In a particular embodiment according to the invention, an intermediary layer 5 of Kraft paper suitably impregnated as above, is present.

The bonding between fabric 2 and external layers 3 (and where necessary, 5) is achieved according to the techniques normally used in the production of plastic laminates and, in particular, can advantageously be done using CPL or HPL technology.

Where CPL technology is used, the composite material can have a thickness inclusive between 0.3 mm and 2 mm, while in the case of the use of HPL technology, the same material can have a thickness inclusive between 0.5 mm and 30 mm.

The thickness selected for the composite material according to the invention, will depend on the type of final application for which the same material is destined.

For instance, in the case of the use of the final product (composite material bonded to an internal structural support layer) in the naval and railway sector, the decorative layer impregnated with either melamine or phenolic resin and the layer of impregnated glass fiber fabric will have thickness up to around 2,0 mm to satisfy the norms in force in some European countries.

On the other hand, in the case of use in the aerospace sector, the decorative layer impregnated with phenolic resin and the layer of glass fiber fabric impregnated will have a thickness of around 0.5 mm.

In more detail, the preferred technique benefits from the use of a heated press that exerts a pressure of between 40 kg/cm² and 150 kg/cm², and preferably a pressure of about 80kg/cm². The temperature at which the bonding occurs can vary between 20°C and 200°C depending on the characteristics of the products to be bonded. For instance, in the embodiment described in which the fabric is formed of glass fibers and phenolic resin, the bonding temperature is around 170°C.

The composite covering material 1 so obtained is an intermediary product that is also an object of the present invention.

Fig.2 shows, in section, the same composite covering material 1 already shown in fig.1.

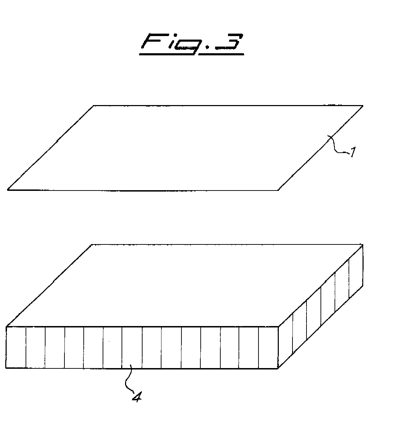

Fig. 3 shows a panel in which the decorative covering material 1, already shown in Figures 1 and 2, is bonded to an internal, structural layer 4, formed for instance by a honeycomb structure in aluminum. As previously mentioned, other types of material can be used for the embodiment of the structure 4, that besides being the of honeycomb type, can be chosen for instance from all the materials normally used as cores for sandwich panels such as wood, cork, expanded foams, calcium silicates, aluminum honeycomb, aramid honeycomb, etc.

Still according to the present invention, the decorative covering material 1 can be positioned and bonded on both the upper and lower sides of said structural layer 4. Such bonding happens, for instance, through interposition of at least one adhesive layer between decorative 1 and structural 4 layers. Said adhesive can advantageously be selected from mono or bi-component adhesive liquid, thermosetting or thermoplastic film, hot or cold polymerizable.

The process of producing the panel according to the invention, with reference to attached figures, comprises the following phases:
- construction of the decorative laminate 2+3 (possibly + 5) with technology HPL or CPL
- gluing of one or two decorative 2+3 (possibly + 5) on one or both the sides of the core 4 through heat pressure or cold pressure in a press multispace, press in continuous, press in step semicontinuous.

The invention will now be described with reference to the following examples, in which the current costs of the raw materials are also indicated.

### Example 1. Traditional panel.

The panel carries decoration on one side only.
- An aluminum plate of thickness 1.5mm, weight 4.0 kg/m²
- An aluminum plate of thickness 0.7 mm, weight 1.9 kg/m²
- A honeycomb
- 300 g/m² adhesive type A on the two parts
- 0.9 mm HPL decorative sheet, weight 1.25 kg/m²
- 100 g/m² adhesive type B on only one part.

In this case, two steps are provided, one for gluing the aluminum plates to the honeycomb and a following one for gluing the decorative sheet to the resulting panel already provided with the two sheets in aluminum.

### Example 2. Panel according to the invention.

The panel has a decoration on one side only.
- A honeycomb
- Glass fiber decorative sheet 1.5 mm weight 2.8 kg/m²
- non-decorative laminated glass fiber 0.8-1 mm weight between 1.5-1.9 kg/m²
- 200 g/m² adhesive type A on two parts.

In this case, one step is foreseen, only, for gluing the decorative laminate to the honeycomb.

The following are some particularly suitable applications of the panels produced according to the invention. Such applications and the corresponding characteristics of the panels are described with reference to the national/international norms in force at the filing date of the application.

Decorative trim panels Railway Carriages.

The panels for the above mentioned use currently have to comply with the following norms:
- Afnor or British Standard norms regarding fire resistance
- norms related to impact resistance (2.5 kg sphere from a height of 1 m)
- limitation of the weight per square meter.

The panels produced according to the present invention (composite material constituted by decorative sheet impregnated with thermosetting resin between 30 and 80% by weight, possibly kraft paper impregnated with phenolic resin between 30 and 80% by weight and fabric impregnated with phenolic resin between 30 and 80% by weight, bonded to a core or support typically honeycomb satisfy the Afnor norms with level M1 F1 and in the case in which the resin that impregnates the decorative sheet is phenolic resins, the qualification is M1 F0. The traditional panels are generally qualified M1 F2.

With respect to certification according to the British Standard, no traditional HPL sheet can get the certification, while the panels object of the invention are certified in the highest category 1 a for use on subway trains.

With respect to the sphere test, the traditional panels with 1,5 mm aluminum substratum and 0.9 mm decorative sheet (total 5.5 kg/m²) don't survive, the test, while the panels according to the present invention, produced with a glass fiber base laminate of thickness 1.5 mm and weight of around 2.8 kg/m², withstand the test.

### Decorative trim panels For Naval Interiors

In the aforesaid application field, the panels according to the present invention satisfy the Solas requirement as do those according to the known art but, compared to the latter, have overall lower weight and cost.

### Decorative trim panels For Airplane interiors

Currently, the panels according to the known art for interior use in airplanes have very high cost and, furthermore, have an extremely limited number of possible decorations.

Compared to the products produced according to the known art for the same use, panels according to the present invention have superior mechanical characteristics for parity of weight and clearly lower costs of around 50%.

For this application, behavior on exposure to fire must currently satisfy the Farr/Jarr norms and the panels in which the outside decorative layer is impregnated with melamine resin don't pass the required tests.

The panels according to the present invention, produced with the decorative component impregnated with phenolic resin, pass the required tests, have high resistance to abrasion, offer a very wide range of decoration and cost less, compared to the panels according to the known art for the same use.

## Claims

1. Decorated panel, comprising a structural layer (4) bonded to at least one decorative layer (1), **characterized by** the said decorative layer comprising a layer of fabric (2) of fibers selected from aramid fibers, PE-UHMW fibers, carbon fibers and glass fibers and mixtures thereof, said layer of fabric being impregnated with a thermosetting resin and being bonded with at least one decorative layer of paper (3) impregnated with thermosetting resin.

2. Panel according to Claim 1, **characterized by** said thermosetting resin being chosen from phenolic resin or melamine or mixtures thereof.

3. Panel according to the preceding claims, **characterized by** comprising furthermore at least one layer of kraft paper (5) impregnated with thermosetting resin, positioned between said fabric (2) and said decorative layer (3).

4. Panel according to any of the preceding claims, **characterized by** said structural layer (4) being a layer with honeycomb structure.

5. Decorative composite material (1) for the application to a panel according to any of the preceding claims, **characterized by** comprising a layer of fabric (2) in fibers selected from aramid fibers, PE-UHMW fibers, carbon fibers and glass fibers and mixtures of these, and said layer of fabric being impregnated with a thermosetting resin and being bonded with at least one decorative layer of paper (3) impregnated with thermosetting resin.

6. Composite material (1) according to Claim 5, **characterized by** said fabric of fibers (2) having a weight in the range between 20 g/m² and 1000 g/m².

7. Composite material (1) according to Claim 6, **characterized by** said fabric of fibers (2) having a weight in the range between 60 and 450 g/m², preferably between 80 and 200 g/m² and a thickness in the range between 0.05 and 3 mm.

8. Composite material according to Claims from 5 to 7, **characterized by** being produced from glass fiber fabric with a weight of 200 g/m² and with a thickness of 0.18 mm, impregnated with phenolic resin in a quantity in the range between 25 and 60% by weight on the total weight.

9. Process for the production of a panel according to any of Claims from 1 to 4, **characterized by** comprising the following phases:
- construction of said decorative layer using HPL or CPL technology
- gluing at least one of said decorative layer on at least one side of said structural layer by hot or cold pressing on a press chosen from multi-bay press, continuous press, step semi-continuous press.

10. Use of the panel according to any of Claims from 1 to 4 as a trim panel of railway carriage, airplane and naval interiors.
